# EUROPEAN PATENT SPECIFICATION

(11) **EP 1 612 752 B1**
(45) Date of publication and mention of the grant of the patent: **12.09.2007**
(21) Application number: 04015535.0
(22) Date of filing: 01.07.2004
(51) Int. Cl.: G08B 13/24

(54) **Protection of items within stores**
Schutz von Artikeln in Läden
Protection des articles dans des magasins

(43) Date of publication of application: 04.01.2006
(73) Proprietor: SAP AG, 69190 Walldorf (DE)
(72) Inventor: Siefke, Wolfram, 69117 Heidelberg (DE); Staeck, Jens, 69207 Sandhausen (DE)
(74) Representative: Walter, Philipe

(56) References cited:
- US-A1- 2002 040 927
- US-A1- 2004 000 997

## Description

### FIELD OF THE INVENTION

The present invention relates in general to a method for detecting items within stores, which are not intended for sale, by registering each of the items as being sold when the items are sold.

The invention also relates in general to a system for detecting items within stores, which are not intended for sale, using a transmitter registering each of the items as being sold when the items are sold.

The invention relates in general also to a computer program and a computer program product for detecting items within stores, which are not intended for sale, the program comprising instructions operable to cause a processor to register each of the items as being sold when the items are sold.

### BACKGROUND

It is known that items of retail and wholesale stores may be identified using unique identifiers. These unique identifiers may include, for instance, radio frequency identification (RFID) tags. These RFID tags may be attached to each of the items. On the RFID tags, a unique identification, such as a unique number, may be stored. This number may be interrogated from the unique identifier for taking inventory of the store. The unique identifiers may also be used during purchase of items from the stores. At the checkout desk, the unique identification may be read from the unique identifier and a corresponding price may be provided. This enables a cashier to scan the items quickly and to calculate the price of all items automatically.

To update the inventory of the store, it is also known in the art that if an item is actually sold, this item may be deleted from the list of the items on stock. This may be done, for instance, by using the unique identification, which may be stored in a database. When the item is sold, the database is updated, such that, for instance, the unique identification may be deleted completely from the database. Such items may include, for instance, goods, products, devices, foods, or any other items that may be sold in a store.

However, a technical problem of retail stores, convenience stores, restaurants, wholesale stores or any other stores may be that they do not know whether an item has previously been sold, or, if the item has previously been sold, whether it is allowed to be sold again. For example, a customer may return a previously-purchased item for credit. As another example, a customer may sneak an item into a store and improperly place it for sale.

In particular, maliciously modified items may be brought to a store undiscovered, to be used for blackmailing the store. Manipulated items may be items that have been bought or stolen from the same store, or from somewhere else. For instance, food may be manipulated with poison, and then brought back to the store and placed on the shelves. A customer may not detect the manipulation and may buy this item. There is no technical implementation that prevents items that are not intended to be sold from being taken from the store.

In the example just given, a customer would buy poisoned food. As a result, the store may be sued by the customer, even though the store is not responsible for the poisoning of the customer. Moreover, the original producer of the food item may suffer as well, as its brand or image may be damaged in the marketplace (for example, by negative publicity surrounding the sale of the poisoned food item).

From US 2004/0000997A1, a system and a method of detecting movement of an item is provided. For detecting movement of an item, an RFID reader for receiving RFID label identification information from an RFID label associated with the item is provided. A computer is provided for determining a location of the RFID label and the item by determining a location information from the RFID reader, and for determining a preferred location for the RFID label and the item. A computer compares the determined location with the preferred location to determine that the RFID label and the item have been moved. It is possible, to implement recall procedures. In these cases, the computer text at check out terminal the item status data file. For each item, the status from the item status data file is read and it is determined, whether the associated product is marked as unavailable for sale due to a recall. Recall products can thus be collected before any sales are made, or prevented from sales. However, it is not possible, to detect, whether products have been moved out of the store.

A related technical problem may be that items, which, for example, have been returned or brought unauthorized into a store, need to be detected. It may be necessary to prevent these items from being sold.

### SUMMARY

To overcome these problems, the invention provides a method for detecting if items are not intended for sale, by determining data records that individually correspond to each of the items, each data record storing a status of its corresponding item, the status reflecting an in-stock condition when its corresponding item is ready for sale. The data record of each item is checked, prior to selling each item, to thereby output an alarm signal when the data record is missing or otherwise does not reflect the in-stock condition, and the data records are modified to indicate a sold status for each of the items, as each item is sold.

In checking the data records, it may be checked whether a) the items carry a unique identifier correctly associated with a corresponding data record, or b) the items have not been registered as sold. In this way, an alarm signal may be provided if at least one of the conditions a) or b) is false.

By using, for example, a high frequency interrogator, such as, for instance, a transmitter, which may be able to interrogate wirelessly accessible unique identifiers, such as, for example, transponders or RFID tags, it may be checked prior to selling the items whether a unique identifier is attached to the items. When interrogating the unique identifier, it may also be possible to check whether this item has been registered as (previously) sold.

If one of these conditions is not complied with, it may be possible to provide an alarm signal. Thus, it may be possible to prevent selling items that do not carry a unique identifier at all, or items that carry an identifier with no match to one of the stored data records. These items may be items that have been brought to the store from somewhere else.

By checking whether the items are registered as sold, it may be possible to prevent items, which have once been sold, from being re-sold. No items may be brought out of the store unless they have a unique identifier and have been registered as sold. Transmitters for interrogating transponders at the exit of the store, or at the checkout desks, may be responsible for interrogating the identifiers of the items. Since every item may carry a tag with an individual identifier, it may be possible to check every individual item.

For instance, an item with the status "sold" is brought back into the store by fraud. In case such an item appears at the cash desk, it may be detected that this item already has been sold, and an alarm signal may be provided. For instance, if an item without a unique identifier is brought back into the store by fraud, this item may be detected at the checkout desk again. This may indicate that this item is not intended for sale, and the alarm signal may also be provided.

The alarm signal may be any signal that may cause the item from being sold. This may be an acoustical or optical signal. For example, the alarm signal may be sent to a door opener, which prevents the door from being opened. Any other possible alarm signal may also be provided.

According to some implementations, each of the items may be registered within its corresponding data record as being delivered to the store during delivery of the items to a store. For example, all of the items which are brought to the store intentionally by the store may be registered as "in stock."

According to some implementations, it may be checked whether items are registered as being delivered to the particular store, for instance "in stock," and providing an alarm signal if at least one of the required conditions is false. Thus, it may be possible not only to detect all items which do not have a unique identifier, or which already have been registered as sold, but also items which were not brought into the store intentionally.

At the receiving department of a store, the unique identifiers may be interrogated and the respective items may be registered as being "in stock." If this status is also checked before selling the items, then only items that have been received by the receiving department, may be sold.

For instance, a checkout desk transmitter may monitor a buying process. This transmitter may check whether the items carry a unique identifier, whether the items have not been previously registered as sold, and/or whether the items are registered as being delivered to the particular store. This checking at the checkout desk provides, for example, that the items are only sold if they are intended to be sold.

According to some implementations, it may also be possible that once the items are brought outside the store, they are registered as being outside the store. This may, for example, be done at the exit of the store. For instance, a transmitter at the exit registers the status of the item as "outside." This may document that the item has definitively left the store. Simultaneously, for instance, an additional theft-protection may be performed. This may be done by checking whether the item has the status "in stock," and not whether the item is not being registered as "sold." Therefore, it may be determined whether this item is stolen.

A malicious return of items may be avoided, for example, by checking at a shop entrance whether items registered as being "sold" and/or being "outside" the store are brought back into the store. In either of these cases, the items brought back to the store may already have been sold. Selling such items again should be prevented. An alarm signal may be generated if either of these conditions is true. This alarm signal may cause actions necessary to prevent bringing the items back into the store. For example, a returns desk may need to be placed outside the monitored area, as otherwise returns of customers having legitimately purchased defective items would cause an alarm. However, items without a unique identifier or being bought at a different shop without being registered as "sold" or "outside," may not be detected. These items may be detected at the exit or the checkout desk.

For example, some implementations provide registering each of the items as being delivered to the store, as being sold, or as being outside the store. This may be done by writing the respective status, for example "in stock,", "sold" or "outside," onto the unique identifier. The unique identifier may, for instance, be a smart tag. Inasmuch as such a smart tag allows writing data onto a memory area within the tag itself, implementations allow writing the status of the tag onto the tag itself. This may be done by transmitters, which are responsible for interrogating and writing data to and from the unique identifiers.

Implementations provide encryption for writing and/or reading data to and/or from the unique identifiers. By encrypting the data written and/or read to and/or from the unique identifiers, the respective data may be prevented from being manipulated. Fraudulent changes to the data of the unique identifiers may be detected, inasmuch as the data is encrypted, and writing non-encrypted data or data with the wrong encryption key may be detected. For encrypting the data, common encrypting algorithms may be used.

As the unique identifiers may carry unique identifications, implementations provide interrogating the unique identifications from the unique identifiers of the items. By that, it may be possible to identify each item uniquely. The unique identifications may be unique numbers.

Implementations provide registering each of the items as being delivered to the store, as being sold, and/or being outside the store. This may, for example, be done by storing the respective status together with the unique identification, for example the unique number, within a central database. Reading the status of an item from the central database, once the unique identification is known, may be possible.

Mapping between unique identification and their respective status may be provided by the central database. When checking whether an item is allowed to be sold, or when checking items brought back into the store, the central database may be queried. In such a case, the unique identification of the unique identifier may be sent to the central database, where the statuses of this unique identifier may be determined and delivered back to the requesting device.

Implementations provide determining from the central database whether the items have been registered as "sold," "in stock" and/or "outside" using the unique identification of the items. The unique identification may be determined from the unique identifiers attached to the respective items. By mapping the unique identification onto the respective status within the database, the statuses may be determined.

According to another aspect, a system is provided for detecting if items are not intended for sale. A classifier is operable to determine data records that individually correspond to each of the items, each data record storing a status of its corresponding item, the status reflecting an in-stock condition when its corresponding item is ready sale. An interrogator is operable to check the data record of each item, prior to selling each item, and a controller in communication with the interrogator is operable to output an alarm signal when the data record is missing or otherwise does not reflect the in-stock condition, and the controller is further operable to modify the data records to indicate a sold status for each of the items, as each item is sold.

The controller may check whether a) each of the items carries a unique identifier that is recognized as being associated with a corresponding data record, or b) each of the items has not previously been registered as sold within its corresponding data record, and is further operable to provide the alarm signal if at least one of the conditions a) or b) is false.

According to a further aspect, a computer program product for detecting if items are not intended for sale is described. The product comprises a program stored thereon comprising instructions operable to cause a processor to determine data records that individually correspond to each of the items, each data record storing a status of its corresponding item, the status reflecting an in-stock condition when its corresponding item is ready for sale. The instructions further cause the processor to check the data record of each item, prior to selling each item, to thereby output an alarm signal when the data record is missing or otherwise does not reflect the in-stock condition, and to modify the data records to indicate a sold status for each of the items, as each item is sold.

The program further may comprise instructions to check whether a) each of the items carries a unique identifier that is recognized as being associated with a corresponding data record, or b) each of the items has not previously been registered as sold within its corresponding data record, and provide an alarm signal if at least one of the conditions a) or b) is false.

Referring now to the drawings, in which like numerals represent like elements throughout the several figures, aspects of the present invention and example operating environments are described.

### BRIEF DESCRIPTION OF THE DRAWINGS

In the figures:
- FIG. 1: is a block diagram of a computer system for protecting items within stores;
- FIGS. 2a-e: are block diagrams of different implementations using the computer system of FIG. 1;
- FIG. 3: is a first flowchart illustrating techniques used by the implementations of FIGS. 2a-e; and
- FIG. 4: is a second flowchart illustrating techniques used by the implementations of FIGS. 2a-e.

### DETAILED DESCRIPTION

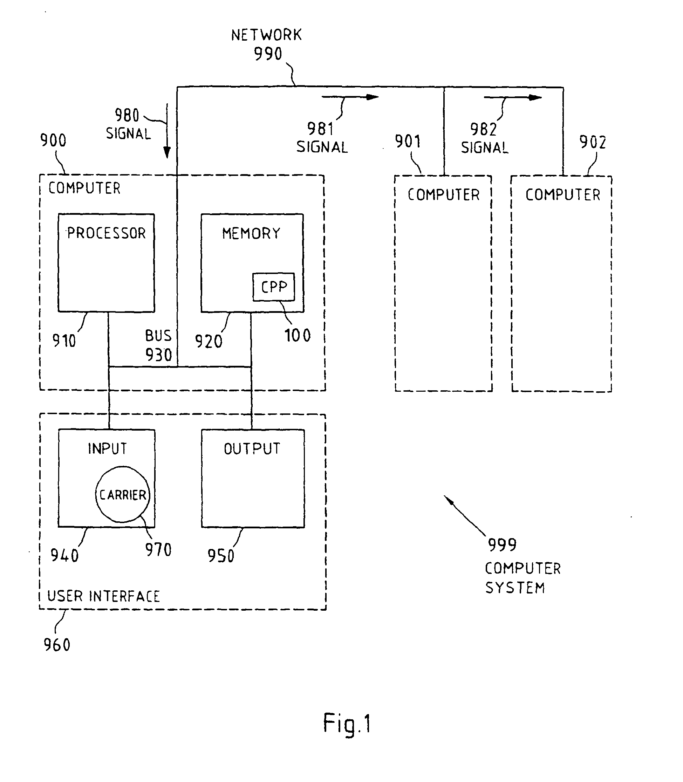

In FIGS. 1 to 4, while reference numbers 100/200, 110/210 denote similar elements, the function of these elements may be different.

A computer system for protecting items within stores is illustrated in FIG. 1. FIG. 1 illustrates a simplified block diagram of a computer system 999 having a plurality of computers 900, 901, 902 (or even more).

Computer 900 can communicate with computers 901 and 902 over network 990. Computer 900 has processor 910, memory 920, bus 930, and, optionally, input device 940 and output device 950 (I/O devices, user interface 960). As illustrated, the invention is implemented by computer program item 100 (CPP), carrier 970 and signal 980.

With respect to computer 900, computer 901/902 is sometimes referred to as a "remote computer", and computer 901/902 is, for example, a server, a peer device or other common network node, and typically has many or all of the elements described relative to computer 900.

Computer 900 is, for example, a conventional personal computer (PC), a desktop device or a hand-held device, a multiprocessor computer, a pen computer, a microprocessor-based or programmable consumer electronics device, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 is comprised of elements that temporarily or permanently store data and instructions. Although memory 920 is illustrated as part of computer 900, memory can also be implemented in network 990, in computers 901/902 and in processor 910 itself (e.g., cache, register), or elsewhere. Memory 920 can be read-only memory (ROM), random access memory (RAM), or memory with other access options. Memory 920 is physically implemented by computer-readable media, for example: (a) magnetic media, like a hard disk, a floppy disk or other magnetic disk, a tape, or a cassette tape; (b) optical media, like optical disk (CD-ROM, digital versatile disk - DVD); or (c) semiconductor media, like DRAM, SRAM, EPROM, EEPROM, or a memory stick.

Optionally, memory 920 is distributed. Portions of memory 920 can be removable or non-removable. For reading from media and for writing in media, computer 900 uses well-known devices, for example, disk drives or tape drives.

Memory 920 stores modules such as, for example, a basic input output system (BIOS), an operating system (OS), a program library, a compiler, an interpreter, and a text-processing tool. Modules are commercially available and can be installed on computer 900. For simplicity, these modules are not illustrated.

CPP 100 has program instructions and - optionally - data that cause processor 910 to execute method steps of the present invention. In other words, CPP 100 can control the operation of computer 900 and its interaction in network system 999 so that it operates to perform in accordance with the invention. For example and without the intention to be limiting, CPP 100 can be available as source code in any programming language, and as object code ("binary code") in a compiled form.

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an item of manufacture having a computer-readable medium with computer-readable program code to cause the computer to perform methods of the present invention. Further, signal 980 can also embody computer program item 100.

Having described CPP 100, carrier 970, and signal 980 in connection with computer 900 is convenient. Optionally, further carriers and further signals embody computer program items (CPP) to be executed by further processors in computers 901 and 902.

Input device 940 provides data and instructions for processing by computer 900. Device 940 can be, for instance, a keyboard, a pointing device (e.g., mouse, trackball, cursor direction keys), microphone, joystick, game pad, scanner, or disc drive. Although the examples are devices with human interaction, device 940 can also be a device without human interaction, for example, a wireless receiver (e.g., with satellite dish or terrestrial antenna), a sensor (e.g., a thermometer), or a counter (e.g., an items counter in a factory). Input device 940 can serve to read carrier 970.

Output device 950 presents instructions and data that have been processed. For example, this can be a monitor or a display, cathode ray tube (CRT), flat panel display, liquid crystal display (LCD), speaker, printer, plotter, or a vibration alert device. Output device 950 can communicate with the user, but it can also communicate with further computers.

Input device 940 and output device 950 can be combined to a single device. Any device 940 and 950 can be provided optionally.

Bus 930 and network 990 provide logical and physical connections by conveying instruction and data signals. While connections inside computer 900 are conveniently referred to as "bus 930," connections between computers 900 902 are referred to as "network 990." Optionally, network 990 includes gateways, which are computers that specialize in data transmission and protocol conversion.

Devices 940 and 950 are coupled to computer 900 by bus 930 (as illustrated) or by network 990 (optionally). While the signals inside computer 900 are mostly electrical signals, the signals in network are electrical, electromagnetic, optical or wireless (radio) signals.

Networks are commonplace in offices, enterprise-wide computer networks, intranets and the Internet (e.g., the world wide web). Network 990 can be a wired or a wireless network. To name a few network implementations, network 990 can be, for example, a local area network (LAN), a wide area network (WAN), a public switched telephone network (PSTN); an Integrated Services Digital Network (ISDN), an infrared (IR) link, a radio link like Universal Mobile Telecommunications System (UMTS), Global System for Mobile Communication (GSM), Code Division Multiple Access (CDMA), or satellite link.

A variety of transmission protocols, data formats and conventions is known, for example, as transmission control protocol/internet protocol (TCP/IP), hypertext transfer protocol (HTTP), secure HTTP, wireless application protocol (WAP), unique resource locator (URL), a unique resource identifier (URI), hypertext markup language (HTML), extensible markup language (XML), extensible hypertext markup language (XHTML), wireless markup language (WML), and Standard Generalized Markup Language (SGML).

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides," are convenient abbreviations to express actions by a computer that are controlled by a program.

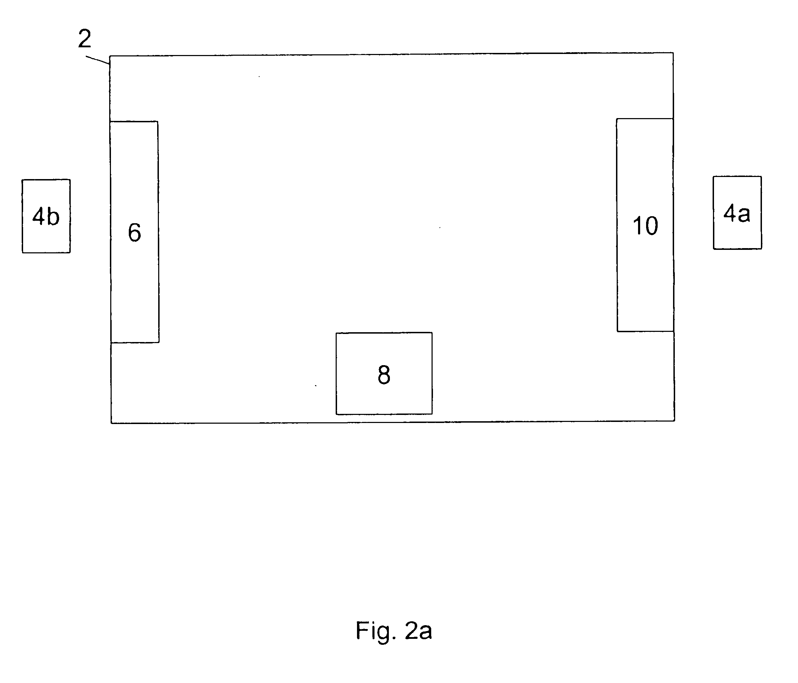

The exemplary computer system may be incorporated into a system as shown in FIGS. 2a-e. Throughout the FIGS. 2a-e, a store 2 is shown. Further shown are items 4a, 4b, a store entrance 6, a checkout desk 8 and a receiving department 10.

Entrance 6, checkout desk 8, and receiving department 10 are located inside store 2. At the entrance 6, the checkout desk 8 and the receiving department 10, transmitters may be located (not depicted). These transmitters may allow interrogating data from RFID tags and may allow writing data onto the RFID tags. An arrangement according to FIGS. 2a-e allows implementing an inventive method.

Entrance 6, checkout desk 8 and receiving department 10 may be connected to a central database (not depicted). Both items 4a, 4b carry an RFID tag, which may, for instance, be a smart tag carrying data that may be manipulated wirelessly by sending data onto the RFID tag.

When item 4a is delivered to store 2, it has to pass the receiving department 10. During delivery through receiving department 10, item 4a is marked with the status entry "in stock". All items 4a being marked with a status entry "in stock" are supposed to be in stock in the store and may be stored at self-service shelves within the store 2. Writing the status entry "in stock" onto the RFID tag of item 4a may be protected using standard authorization techniques. The data may also be encrypted.

A person who wants to blackmail the store, for example, might bring manipulated item 4b, which is not intended for sale, into the store 2 through entrance 6. The manipulated item 4b may not carry any RFID tag. At entrance 6 each person is checked, whether the person carries any items with a readable RFID tag. In case an item with a readable RFID tag is detected, its status entry may be interrogated from the RFID tag. In case items with a status entry "sold" or "outside" are brought into the store 2 through entrance 6, an alarm signal may be generated to prevent these items from being put back onto the shelves of the store 2.

However, items without an RFID tag or with an unreadable RFID tag may not be detected at entrance 6 and brought into the store 2. In the current example, this is the case for item 4b.

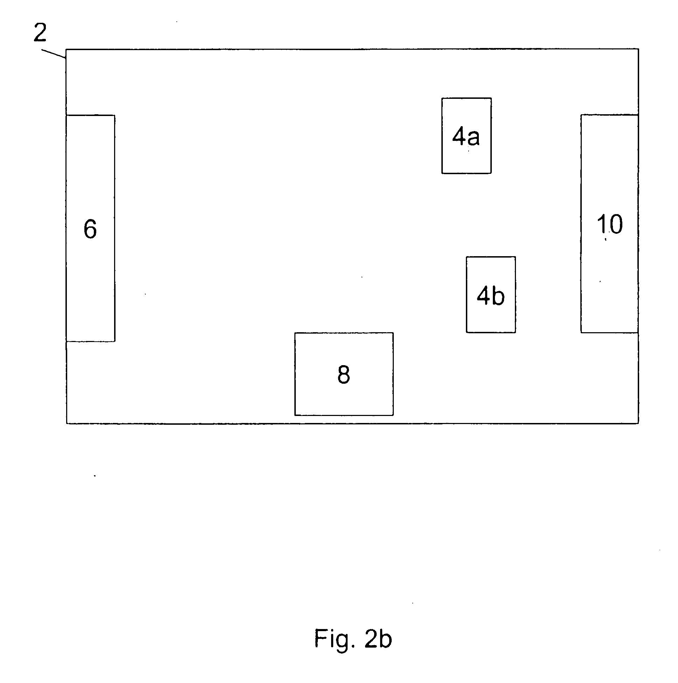

FIG. 2b shows the store 2, within which the items 4a and 4b are located. Item 4a may be intended for sale. Item 4b may not be intended for sale. Item 4b may, for instance, be a manipulated item. This item needs to be prevented from being sold. This may be done by checking that all items at the checkout desk have RFID tags with statuses indicating that sale of the items is allowed.

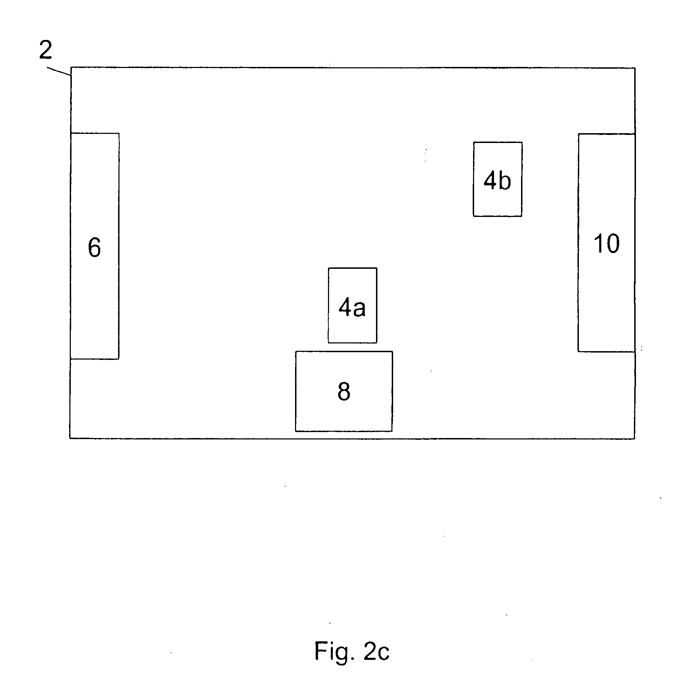

As depicted in FIG. 2c, the item 4a is intended to be sold. During the buying process, item 4a needs to pass the checkout desk 8. During the buying process, the transmitter located at checkout desk 8 interrogates RFID tag of item 4a. It may be checked whether item 4a carries a RFID tag. If item 4a carries a readable RFID tag, the status entry of this RFID tag may be interrogated. After interrogating the status entry of item 4a, it may be checked whether this status entry is "in stock." Further, it may be checked whether the status entry is not "sold" or "outside." If the item 4a carries a RFID tag and has a status entry "in stock," the item 4a is allowed to be sold. The transmitter located at checkout desk 8 committing the buying process may write a status entry "sold" onto the RFID tag of item 4a. Writing this status entry "sold" onto the RFID tag of item 4a, marks it as having been sold.

Items without an RFID tag, or without a status entry "in stock" may be detected, and an alarm signal may be generated.

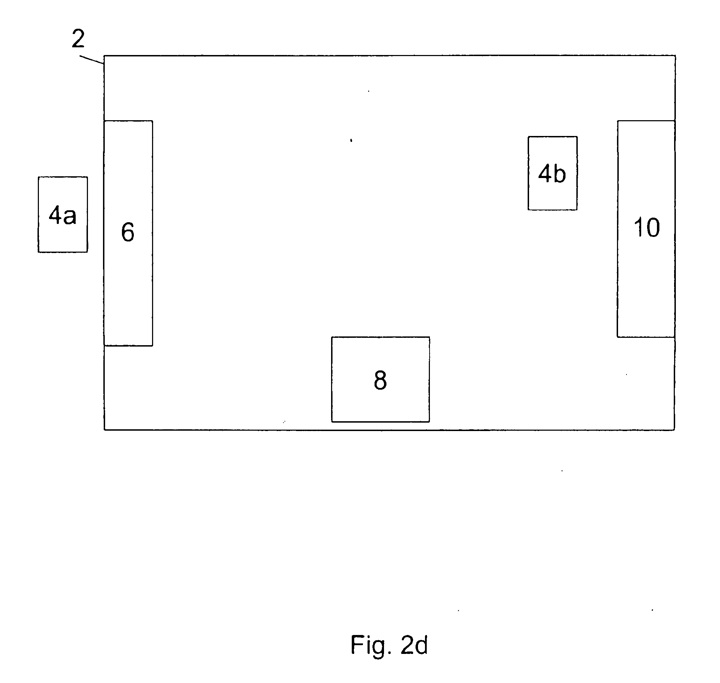

As depicted in FIG. 2d, after its purchase, item 4a passes entrance 6. The transmitter at entrance 6 may write the status entry "outside" onto the RFID tag of item 4a. Item 4a may thus be marked as already being outside the store 2. Bringing back this item 4a into the store 2 would cause an alarm signal at entrance 6, as the transmitter at entrance 6 may interrogate all RFID tags of items brought into store 2. Items carrying a status entry "outside" may cause the generation of the alarm signal.

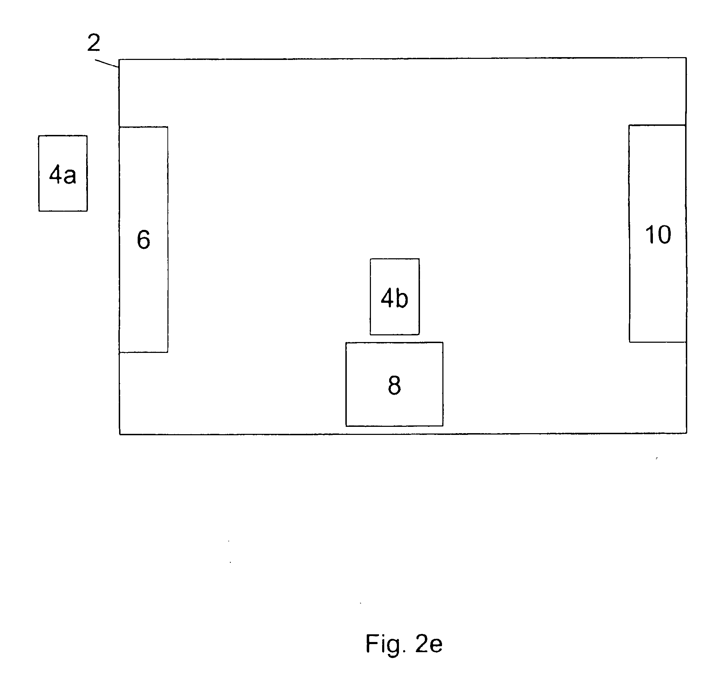

FIG. 2e shows a buying process of an item 4b, which is not intended for sale and does not carry an RFID tag. During the buying process the transmitter at cash desk 8 may interrogate whether item 4b carries an RFID tag. If the transmitter does not detect any readable RFID tag, the alarm signal may be generated.

For example, item 4b may carry an RFID tag. However, the status entry of this RFID tag may be "sold" or "outside." If either of these two status entries are read by the transmitter at checkout desk 8, an alarm signal may also be generated.

It may also be possible that during the delivery of an item 4a to store 2 through the receiving department 10 the unique identification of the RFID tag of item 4a is read and this unique identification together with a status of " in stock" may be stored within a central database (not depicted). When item 4a is sold, as shown in FIG. 2c, the transmitter at the checkout desk 8 may read the unique identification of the RFID tag of item 4a and determine its status from the central database. In case this status is "in stock," this item 4a is cleared for selling. Also, the status may be changed from "in stock" to "sold" within the central database.

When the item 4a is brought outside the store 2, as shown in FIG. 2d, the transmitter at entrance 6 may read the unique identification of the RFID tag of item 4a and may change the status of this RFID tag within the central database from "sold" to "outside."

If an item 4b carrying a RFID tag with a different status than "in stock" is brought to the checkout desk 8, the transmitter at checkout desk 8 may interrogate the unique identification of the RFID tag of item 4b. The unique identification may be used for determining from the central database the status of the item. In this case, the status may be determined to be not "in stock." In such a case, the buying process may be stopped by generating an alarm signal.

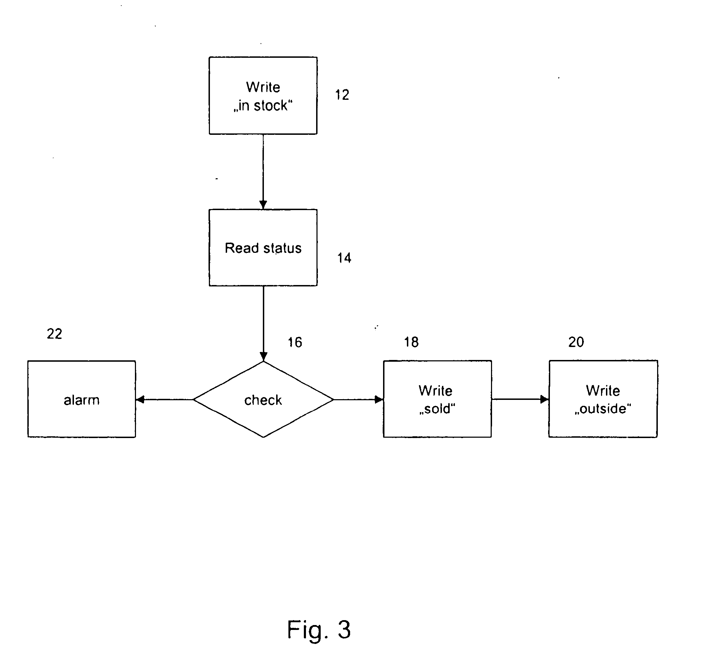

FIG. 3 is a flowchart illustrating techniques used in conjunction with the systems of FIGS. 1 and 2a-2e. If an item is delivered to a store, its status is registered as "in stock" (12). Once the item is brought to the checkout desk, the registered status of this item is determined (14). After determining the status, it may be checked (16) whether the status is "in stock" and not "sold" or not "outside." If the item carries a tag at all and all of these conditions are true, the buying process may be cleared. After clearance, the status of the item may be changed to "sold" (18). When the item leaves the store, the status of the item may be changed to "outside" (20).

In case during the check (16), an item is detected which has not the status "in stock," for instance, if it is registered as "sold" or "outside" or does not carry any tag at all, an alarm signal may be generated (22).

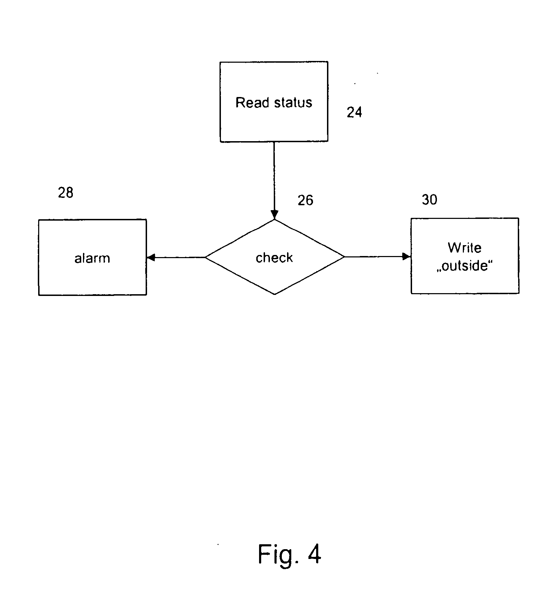

FIG. 4 is a flowchart illustrating techniques for checking items at the entrance of a store. At the entrance of the store, a transmitter may interrogate all RFID tags passing the entrance (24). After interrogating the status, this status may be checked (26). If a status read from an RFID tag is "outside," an alarm signal may be generated. These statuses may indicate that the item has already been outside the store and is not intended for sale. If a status read from an RFID tag is "in stock," again an alarm signal may be generated (28). Such a status may indicate that the items have not been purchased, as otherwise their status would have been registered as "sold" when cleared properly at the checkout desk.

In case a status is "sold," the status may be changed to "outside" (30) at the entrance. This allows identification of the item being brought back into the store.

Based on the above, it should be understood that registering a status of an item may refer to updating a data record associated with the item to reflect at least one of a pre-determined number of categories describing the item. For example, the data record may include the status information, "delivered," "in-stock," "delivered and in-stock," "sold," or "outside," or "sold and outside," to name a few. The data record also may include a unique identification number associated with a similarly-unique identifier of the item. The data record may be stored within the identifier, e.g., smart tag, and/or may be stored within a centralized database. A classifier may be used to associate the data records, along with their respective status and identification information, with associated items and their identifiers.

Using the data records, store owners may determine a status of an item, and, particularly, whether a given item is ready for sale. For example, it may be required that an item's data record include the status information "in-stock" before the item may be sold. As a result, if an item is checked and found to have an identifier that is not associated with any known data record, or to have not identifier at all, then the item may not be sold. As a result, items and identifiers from other stores will not be re-sold within the store. Similarly, even if an item is from the store, it will not be sold if it does not have a proper identifier.

If an identifier of an item is checked and the associated data record reveals a status of anything other than "in-stock" or some other acceptable status, then, again, the item may not be sold. For example, if a data record associated with an identifier contains the status "sold" or "outside," then the respective item may not be sold. In this way, improperly returned items from the store may not be sold.

Although various examples of implementations have been described above, it should be understood that many other examples exist. For instance, it should be understood that techniques will typically exist for enabling proper returns of items for re-sale within the same store, under defined conditions. For example, when an item is returned, store personnel may check the item to make sure that it has not been opened or otherwise tampered with. If this is the case, then a data record associated with the item may be changed from "sold" and/or "outside" back to "in-stock," so that the item may legitimately be re-sold within the store.

As another example, most of the scenarios described above describe checking the data record and/or status of an item during a checkout process, or during a return process. However, checking may occur at other times, as well. For example, store personnel may routinely scan store shelves to check whether any items on the shelves currently possess an inappropriate status (e.g., "sold" instead of "in-stock"). This implementation may be useful where, for example, the store suspects that someone will plant an explosive or other inappropriately-modified item back onto the store shelves. In such a case, the maliciously-modified item may never be expected to reach the checkout counter for re-sale, but could easily be checked for within the store by a scanning of the store shelves.

As also described above, a central database may be used to store the data records. In this case, particularly for very large stores that process thousands of items for sale, the data records may only be maintained for some pre-determined amount of time after a sale of the associated items, so as to minimize storage requirements.

Based on the above, items within a store are only sold when intended, and are restricted from being sold when they may have been improperly modified or otherwise manipulated. As a result, stores are prevented from being blackmailed by persons that have manipulated items, so that the stores, as well as the original producers of the items, may be spared expensive lawsuits and negative publicity.

### REFERENCE NUMBERS

- 2: store
- 4: item
- 6: entrance
- 8: checkout desk
- 10: receiving department
- 12: register status as "in stock"
- 14: determine status
- 16: check status
- 18: change status to "sold"
- 20: change status to "outside"
- 22: generate alarm signal
- 24: read status
- 26: check status
- 28: generate alarm signal
- 30: change status
- 100: computer program item
- 900: computer
- 910: processor
- 920: memory
- 930: bus
- 940: input device
- 950: output device
- 960: user interface
- 970: program carrier
- 980: program signal
- 990: computer network
- 999: computer network system

## Claims

1. A method for detecting if items within a store are not intended for sale, comprising:
- determining (14) data that individually correspond to each of the items (4), each data record storing a status of its corresponding item (4), the status reflecting an in-stock condition when its corresponding item (4) is ready for sale;
- checking (16) the data record of each item (4), prior to selling each item, to thereby output an alarm signal wherein checking the data record comprises:
- checking (16) whether a) each of the items (4) carries a unique identifier that is recognized as being associated with a corresponding data record, or b) each of the items(4) has not previously been registered as sold within its corresponding data record; and
- providing (28) the alarm signal if at least one of the conditions a) or b) is false; and
- modifying (12) the data records to indicate a sold status for each of the items (4), as each item (4) is sold.

2. The method of claim 1, wherein determining data record comprises:
- modifying (12) the data records to register each of the items (4) as being delivered to the store and as reflecting the in-stock condition, during delivery of the items to the store, and wherein checking (16) the data records comprises:
- checking whether c) the items (4) are registered as being delivered to the store; and
- providing (28) the alarm signal if at least one of the conditions a), b), or c) is false.

3. The method of any one of claims 1 to 2, wherein checking (16) the data record comprises checking the data record during a checkout process to determine whether a) the items (4) each carry respective unique identifiers recognized as being associated with corresponding data records, b) the items (4) have not been registered as sold within their corresponding data records, or c) the items (4) are registered as being delivered to the particular store.

4. The method of any one of claims 1 to 3, wherein modifying (12) the data records further comprises registering (20) the items(4) at an exit of the store as d) being outside the store.

5. The method of claim 4, wherein checking (16) the data records comprises checking the data records to determine that the in stock condition is not present, based on the items (4) being registered as sold or outside the store.

6. The method of any one of claims 1 to 5, wherein determining (14) data records or modifying data records comprises writing the status of each item (4) to a corresponding unique identifier.

7. The method of any one of claims 1 to 6, wherein writing the status comprises providing encryption for data written onto the unique identifiers.

8. The method of any one of claims 1 to 7, wherein determining data records or modifying data records comprises storing the data records, including the status of each item (4) and a unique identification corresponding to each item, within a central database.

9. The method of claim 8, **characterized by** determining from the central database whether b) the items (4) have not been registered as sold, c) the items (4) are registered as being delivered, or d) the items (4) are registered as being outside the store using the unique identification of the items.

10. A system for detecting if items within a store that are not intended for sale, in particular for implementing a method of any one of claims 1 to 9, comprising:
- a classifier that is operable to determine data records that individually correspond to each of the items (4), each data record storing a status of its corresponding item (4), the status reflecting an in-stock condition when its corresponding item is ready for sale;
- an interrogator (8) that is operable to check the data record of each item (4), prior to selling each item; and
- a controller (6) in communication with the interrogator and operable to output an alarm signal wherein the controller(16) is operable to check whether a) each of the items (4) carries a unique identifier that is recognized as being associated with a corresponding data record, or b) each of the items (4) has not previously been registered as sold within its corresponding data record, and is further operable to provide the alarm signal if at least one of the conditions a) or b) is false; and is further operable to modify the data records to indicate a sold status for each of the items (4), as each item is sold.

11. A computer program product for detecting if items within stores are not intended for sale the product comprising a program stored thereon comprising instructions operable to cause a processor to:
- determine (14) data records that individually correspond to each of the items (4), each data record storing a status of its corresponding item (4) (4), the status reflecting an in-stock condition when its corresponding item (4) is ready for sale;
- check (16) the data record of each item (4), prior to selling each item (4), to thereby output an alarm signal checking comprising
- check (16) whether a) each of the items (4) carries a unique identifier that is recognized as being associated with a corresponding data record, or b) each of the items (4) has not previously been registered as sold within its corresponding data record; and
- provide an alarm signal if at least one of the condition a) or b) is false; and
- modify the data records to indicate a sold status for each of the items, as each item is sold.

12. A computer program for detecting if items within stores are not intended for sale the program comprising instructions operable to cause a processor to:
- determine (14) data records that individually correspond to each of the items (4), each data record storing a status of its corresponding item (4), the status reflecting an in-stock condition when its corresponding item (4) is ready for sale;
- check (16) the data record of each item (4), prior to selling each item (4), to thereby output an alarm signal checking comprising
- check (16) whether a) each of the items (4) carries a unique identifier that is recognized as being associated with a corresponding data record, or b) each of the items (4) has not previously been registered as sold within its corresponding data record; and
- provide an alarm signal if at least one of the condition a) or b) is false; and
- modify the data records to indicate a sold status for each of the items (4), as each item (4) is sold.

## Patentansprüche

1. Verfahren zur Bestimmung, ob Gegenstände innerhalb eines Geschäfts nicht zum Verkauf bestimmt sind, das Folgendes umfasst:
- die Bestimmung (14) von Datensätzen, die jeweils jedem der Gegenstände (4) entsprechen, wobei jeder Datensatz einen Status seines entsprechenden Gegenstandes (4) speichert, wobei der Status eine Auf-Lager-Kondition wiedergibt, wenn sein entsprechender Gegenstand (4) zum Verkauf bereit ist;
- die Überprüfung (16) des Datensatzes jedes Gegenstandes (4) vor dem Verkauf jedes Gegenstandes, um auf diese Weise ein Alarmsignal auszugeben, wobei die Überprüfung des Datensatzes Folgendes umfasst:
- die Überprüfung (16), ob a) jeder der Gegenstände (4) einen eindeutigen Identifikator trägt, der als mit einem entsprechenden Datensatz verknüpft erkannt wurde, oder ob b) jeder der Gegenstände (4) nicht vorher schon innerhalb seines entsprechenden Datensatzes als verkauft registriert wurde; und
- die Ausgabe (28) des Alarmsignals, wenn wenigstens eine der Bedingungen a) oder b) falsch ist; und
- die Änderung (12) der Datensätze, um einen Verkauft-Status für jeden der Gegenstände (4) anzuzeigen, sobald jeder Gegenstand (4) verkauft ist.

2. Verfahren nach Anspruch 1, bei dem die Bestimmung von Datensätzen Folgendes umfasst:
- die Änderung (12) der Datensätze, um jeden der Gegenstände (4) als an das Geschäft zugestellt und die Auf-Lager-Kondition während der Lieferung der Gegenstände als an das Geschäft wiedergebend zu registrieren, und bei der die Überprüfung (16) der Datensätze Folgendes umfasst:
- die Überprüfung ob c) die Gegenstände (4) als an das Geschäft zugestellt registriert sind; und
- die Ausgabe (28) des Alarmsignals, wenn wenigstens eine der Bedingungen a), b) oder c) falsch ist.

3. Verfahren nach einem der Ansprüche 1 bis 2, bei dem die Überprüfung (16) des Datensatzes beinhaltet, den Datensatz während eines Warenausgangsprozesses zu überprüfen, um festzustellen, ob a) jeder der Gegenstände (4) entsprechende eindeutige Identifikatoren trägt, die als mit entsprechenden Datensätzen verknüpft erkannt wurden, ob b) die Gegenstände (4) nicht innerhalb ihrer entsprechenden Datensätze als verkauft registriert worden sind, oder ob c) die Gegenstände (4) als an das bestimmte Geschäft zugestellt registriert sind.

4. Verfahren nach einem der Ansprüche 1 bis 3, bei dem die Änderung (12) der Datensätze außerdem die Registrierung (20) der Gegenstände (4) an einem Ausgang des Geschäfts als d) außerhalb des Geschäfts beinhaltet.

5. Verfahren nach Anspruch 4, bei dem die Überprüfung (16) der Datensätze die Überprüfung der Datensätze beinhaltet, um festzustellen, dass die Auf-Lager-Kondition nicht vorliegt, basierend darauf, dass die Gegenstände (4) als verkauft oder außerhalb des Geschäfts registriert sind.

6. Verfahren nach einem der Ansprüche 1 bis 5, bei dem die Bestimmung (14) von Datensätzen oder die Änderung von Datensätzen das Schreiben des Status jedes Gegenstandes (4) auf einen entsprechenden eindeutigen Identifikator beinhaltet.

7. Verfahren nach einem der Ansprüche 1 bis 6, bei dem das Schreiben des Status beinhaltet, eine Verschlüsselung der auf die eindeutigen Identifikatoren geschriebenen Daten zur Verfügung zu stellen.

8. Verfahren nach einem der Ansprüche 1 bis 7, bei dem die Bestimmung von Datensätzen oder die Änderung von Datensätzen die Speicherung der Datensätze einschließlich des Status jedes Gegenstandes (4) sowie einer eindeutigen, jedem Gegenstand entsprechenden Identifizierung innerhalb einer zentralen Datenbank beinhaltet.

9. Verfahren nach Anspruch 8, **dadurch gekennzeichnet, dass** dieses aus der zentralen Datenbank bestimmt, ob b) die Gegenstände (4) nicht als verkauft registriert wurden, ob c) die Gegenstände (4) als zugestellt registriert wurden, oder ob d) die Gegenstände (4) als außerhalb des Geschäfts registriert wurden, indem die eindeutige Identifizierung der Gegenstände verwendet wird.

10. System zur Entdeckung von Gegenständen innerhalb eines Geschäfts, die nicht zum Verkauf bestimmt sind, im Besonderen zur Ausführung eines Verfahrens nach einem der Ansprüche 1 bis 9, wobei dieses Folgendes umfasst:
- einen Sortierer, der betriebsfähig ist, um Datensätze zu bestimmen, die einzeln, jedem der Gegenstände (4) entsprechen, wobei jeder Datensatz einen Status seines entsprechenden Gegenstandes (4) speichert, wobei der Status eine Auf-Lager-Kondition wiedergibt, wenn sein entsprechender Gegenstand zum Verkauf bereit ist;
- eine Abfrageeinrichtung (8), die betriebsfähig ist, den Datensatz jedes Gegenstandes (4) zu überprüfen, bevor jeder Gegenstand verkauft wird; und
- ein Steuergerät (6) in Kommunikation mit der Abfrageeinrichtung, das betriebsfähig ist, um ein Alarmsignal auszugeben, wobei das Steuergerät (16) betriebsfähig ist, um zu überprüfen, ob a) jeder der Gegenstände (4) einen eindeutigen Identifikator trägt, von dem erkannt wurde, dass dieser mit einem entsprechenden Datensatz verknüpft ist, oder ob b) jeder der Gegenstände (4) nicht vorher innerhalb seines entsprechenden Datensatzes als verkauft registriert wurde und weiterhin betriebsfähig ist, um das Alarmsignal auszugeben, wenn wenigstens eine der Bedingungen a) oder b) falsch ist; und weiterhin betriebsfähig ist, um die Datensätze zu ändern, um für jeden der Gegenstände (4) einen Verkauft-Status anzuzeigen, sobald jeder Gegenstand verkauft ist.

11. Computerprogramm-Produkt zur Entdeckung, ob Gegenstände innerhalb von Geschäften nicht zum Verkauf bestimmt sind, wobei das Produkt ein darauf gespeichertes Programm umfasst, das Befehle einschließt, die betriebsfähig sind, einen Prozessor dazu zu veranlassen, dass er:
- Datensätze bestimmt (14), die einzeln jedem der Gegenstände (4) entsprechen, wobei jeder Datensatz einen Status seines entsprechenden Gegenstandes (4) (4) speichert, wobei der Status eine Auf-Lager-Kondition wiedergibt, wenn sein entsprechender Gegenstand (4) bereit zum Verkauf ist;
- den Datensatz jedes Gegenstandes (4) überprüft (16), bevor jeder Gegenstand (4) verkauft wird, um **dadurch** ein Alarmsignal einschließlich der Überprüfung auszugeben;
- überprüft (16), ob a) jeder der Gegenstände (4) einen eindeutigen Identifikator trägt, von dem erkannt wurde, dass dieser mit einem entsprechenden Datensatz verknüpft ist, oder ob b) jeder der Gegenstände (4) nicht vorher innerhalb seines entsprechenden Datensatzes als verkauft registriert wurde; und
- ein Alarmsignal zur Verfügung stellt, falls wenigstens eine der Bedingungen a) oder b) falsch ist; und
- die Datensätze ändert, um für jeden der Gegenstände einen Verkauft-Status anzuzeigen, sobald jeder der Gegenstände verkauft ist.

12. Computerprogramm zur Entdeckung, ob Gegenstände innerhalb von Geschäften nicht zum Verkauf bestimmt sind, wobei das Programm Befehle einschließt, die betriebsfähig sind, einen Prozessor dazu zu veranlassen, dass er:
- Datensätze bestimmt (14), die einzeln jedem der Gegenstände (4) entsprechen, wobei jeder Datensatz einen Status seines entsprechenden Gegenstandes (4) speichert, wobei der Status eine Auf-Lager-Kondition wiedergibt, wenn sein entsprechender Gegenstand (4) zum Verkauf bereit ist;
- den Datensatz jedes Gegenstandes (4) überprüft (16), bevor jeder Gegenstand (4) verkauft wird, um **dadurch** ein Alarmsignal einschließlich der Überprüfung auszugeben;
- überprüft (16), ob a) jeder der Gegenstände (4) einen eindeutigen Identifikator trägt, von dem erkannt wurde, dass dieser mit einem entsprechenden Datensatz verknüpft ist, oder ob b) jeder der Gegenstände (4) nicht vorher innerhalb seines entsprechenden Datensatzes als verkauft registriert wurde; und
- ein Alarmsignal erzeugt, falls wenigstens eine der Bedingungen a) oder b) falsch ist; und
- die Datensätze ändert, um für jeden der Gegenstände (4) einen Verkauft-Status anzuzeigen, sobald jeder Gegenstand (4) verkauft ist.

## Revendications

1. Procédé pour détecter si des objets présents dans un magasin ne sont pas destinés à être vendus, lequel procédé comprend les étapes qui consistent à :
- définir (14) des fiches de données qui correspondent individuellement à chacun des objets (4), chaque fiche de données conservant un statut de l'objet correspondant (4), le statut reflétant le statut "en stock" lorsque l'objet correspondant (4) est destiné à être vendu,
- vérifier (16) la fiche de données de chaque objet (4) avant la vente de cet objet pour ainsi délivrer un signal d'alarme, la vérification de la fiche de données comprenant les étapes qui consistent à :
- vérifier (16) si a) chaque objet (4) porte un identificateur spécifique reconnu comme associé à un fiche de données correspondant et si b) chaque objet (4) n'a pas été précédemment enregistré comme vendu dans sa fiche de données correspondante et
- émettre (28) le signal d'alarme si au moins l'une des conditions a) ou b) n'est pas satisfaite et
- modifier (12) les fiches de données pour qu'elle indique pour chacun des objets (4) le statut "vendu" lorsque l'objet (4) a été vendu.

2. Procédé selon la revendication 1, dans lequel la détermination de la fiche de données comprend les étapes qui consistent à :
- pendant la livraison des objets au magasin, modifier (12) la fiche de données pour y enregistrer que l'objet (4) a été livré dans le magasin et qu'il reflète la condition "en stock", la vérification (16) des fiches de données comprenant les étapes qui consistent à :
- vérifier si c) les objets (4) sont enregistrés comme ayant été livrés au magasin et
- émettre (28) un signal d'alarme si au moins une des conditions a), b) ou c) n'est pas satisfaite.

3. Procédé selon l'une quelconque des revendications 1 à 2, dans lequel la vérification (16) de la fiche de données comprend la vérification de la fiche de données pendant une opération de paiement pour déterminer si a) chaque objet (4) porte un identificateur spécifique reconnu comme associé avec une fiche de données correspondante, si b) l'objet (4) n'a pas été enregistré comme vendu dans la fiche de données correspondante et si c) l'objet (4) a été enregistré comme livré au magasin particulier.

4. Procédé selon l'une quelconque des revendications 1 à 3, dans lequel la modification (12) des fiches de données comprend en outre l'enregistrement (20) des objets (4) à la sortie du magasin comme d) étant sortis du magasin.

5. Procédé selon la revendication 4, dans lequel la vérification (16) des fiches de données comprend la vérification des fiches de données pour déterminer que la condition "en stock" n'est pas remplie lorsque les objets (4) ont été enregistrés comme vendus ou sortis du magasin.

6. Procédé selon l'une quelconque des revendications 1 à 5, dans lequel la détermination (14) des fiches de données ou la modification des fiches de données comprend l'étape qui consiste à écrire le statut de chaque objet (4) dans un identificateur spécifique correspondant.

7. Procédé selon l'une quelconque des revendications 1 à 6, dans lequel l'écriture du statut comprend l'étape qui consiste à crypter les données écrites sur les identificateurs spécifiques.

8. Procédé selon l'une quelconque des revendications 1 à 7, dans lequel la détermination des fiches de données ou la modification des fiches de données comprend l'étape qui consiste à conserver en mémoire les fiches de données dans une base de données centrale, et notamment le statut de chaque objet (4) et une identification spécifique qui correspond à chaque objet.

9. Procédé selon la revendication 8, **caractérisé par** l'étape qui consiste à déterminer dans la base de données centrale si b) les objets (4) n'ont pas été enregistrés comme vendus, c) si les objets (4) ont été enregistrés comme livrés et si d) les objets (4) ont été enregistrés comme sortis du magasin, et ce en utilisant l'identification spécifique des objets.

10. Système pour détecter si des objets présents dans un magasin ne sont pas destinés à la vente, en particulier en vue de mettre en oeuvre un procédé selon l'une quelconque des revendications 1 à 9, lequel système comprenant :
- un classificateur qui peut être amené à déterminer des fiches de données qui correspondent individuellement à chacun des objets (4), chaque fiche de données conservant en mémoire le statut de l'objet (4) correspondant, le statut reflétant la condition "en stock" lorsque l'objet correspondant peut être vendu,
- un interrogateur (8) qui peut être amené à vérifier la fiche de données de chaque objet (4) avant la vente de l'objet et
- un contrôleur (6) qui communique avec l'interrogateur et qui peut être amené à délivrer un signal d'alarme, le contrôleur (16) pouvant vérifier si a) l'objet (4) porte un identificateur spécifique reconnu comme étant associé à une fiche de données correspondante et b) si chacun des objets (4) n'a pas été précédemment enregistré comme vendu dans sa fiche de données correspondante, qui en outre peut délivrer le signal d'alarme si au moins l'une des conditions a) ou b) n'est pas satisfaite et qui est en outre en mesure de modifier les fiches de données pour indiquer pour chacun des objets (4) le statut "vendu" lorsque chaque objet a été vendu.

11. Produit de programme informatique destiné à détecter si des objets présents dans des magasins ne sont pas destinés à la vente, le produit comprenant un programme qui y est conservé et qui comprend des instructions qui peuvent amener un processeur à :
- déterminer (14) des fiches de données qui correspondent individuellement à chacun des objets (4), chaque fiche de données conservant en mémoire le statut de l'objet (4) correspondant, le statut reflétant la condition "en stock" lorsque l'objet correspondant (4) peut être vendu,
- vérifier (16) la fiche de données de chaque objet (4) avant la vente de chaque objet (4) pour ainsi délivrer un signal d'alarme, la vérification comprenant les étapes qui consistent à :
- vérifier (16) si a) chacun des objets (4) porte un identificateur spécifique reconnu comme étant associé à une fiche de données correspondante et b) si l'objet (4) n'a pas été antérieurement enregistré comme vendu dans la fiche de données correspondante et
- délivrer un signal d'alarme si au moins l'une des conditions a) ou b) n'est pas satisfaite et
- modifier les fiches de données pour indiquer le statut "vendu" de chacun des objets lorsque l'objet a été vendu.

12. Programme informatique pour détecter si des objets présents dans des magasins ne sont pas destinés à être vendus, le programme comprenant des instructions qui peuvent amener un processeur à :
- déterminer (14) des fiches de données qui correspondent individuellement à chacun des objets (4), chaque fiche de données conservant en mémoire le statut de l'objet (4) correspondant, le statut reflétant la condition "en stock" lorsque l'objet correspondant (4) peut être vendu,
- vérifier (16) la fiche de données de chaque objet (4) avant la vente de chaque objet (4) pour ainsi délivrer un signal d'alarme, la vérification comprenant les étapes qui consistent à :
- vérifier (16) si a) chacun des objets (4) porte un identificateur spécifique reconnu comme étant associé à une fiche de données correspondante et b) si l'objet (4) n'a pas été antérieurement enregistré comme vendu dans la fiche de données correspondante et
- délivrer un signal d'alarme si au moins l'une des conditions a) ou b) n'est pas satisfaite et
- modifier les fiches de données pour indiquer le statut "vendu" de chacun des objets lorsque l'objet a été vendu.
